(19)

**Europäisches Patentamt**

**European Patent Office**

**Office européen des brevets**

(11)  **EP 3 640 857 B1**

(12)  **EUROPEAN PATENT SPECIFICATION**

(45) Date of publication and mention
of the grant of the patent:
**29.05.2024  Bulletin 2024/22**

(21) Application number: **18201479.5**

(22) Date of filing: **19.10.2018**

(51) International Patent Classification (IPC):
$G06N\ 3/094$ (2023.01)  $G06N\ 3/045$ (2023.01)
$G06N\ 3/0475$ (2023.01)

(52) Cooperative Patent Classification (CPC):
**G06N 5/045; G06N 3/045; G06N 3/084**

(54) **METHOD, VEHICLE, SYSTEM, AND STORAGE MEDIUM FOR INDICATING ANOMALOUS VEHICLE SCENARIO USING ENCODER NETWORK AND DISCRIMINATOR NETWORK INTERMEDIATE LAYER ACTIVATION**

VERFAHREN, FAHRZEUG, SYSTEM UND SPEICHERMEDIUM ZUM ANZEIGEN EINES ANORMALEN FAHRZEUGSZENARIOS UNTER VERWENDUNG EINES CODIERERNETZWERKS UND EINER DISKRIMINATORNETZWERKZWISCHENSCHICHTAKTIVIERUNG

PROCÉDÉ, VÉHICULE, SYSTÈME ET SUPPORT D'INFORMATIONS POUR INDIQUER UN SCÉNARIO DE VÉHICULE ANORMALES UTILISANT L'ACTIVATION D'UNE COUCHE INTERMÉDIAIRE D'UN RÉSEAU DE CODEURS ET D'UN RÉSEAU DE DISCRIMINATEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.04.2020  Bulletin 2020/17**

(73) Proprietor: **Bayerische Motoren Werke Aktiengesellschaft**
**80809 München (DE)**

(72) Inventors:
• **Notz, Dominik**
  **Mountain View, CA 94043 (US)**
• **Zhu, Yi**
  **Elmhurst New York 11373 (US)**

(56) References cited:
• **Houssam Zenati ET AL: "Efficient GAN-Based Anomaly Detection", , 17 February 2018 (2018-02-17), XP055580540, Retrieved from the Internet:**
  **URL:https://arxiv.org/pdf/1802.06222.pdf**
• **Jeff Donahue ET AL: "Adversarial Feature Learning", arXiv:1605.09782v7 [cs.LG], 3 April 2017 (2017-04-03), XP055537374, Retrieved from the Internet:**
  **URL:https://arxiv.org/abs/1605.09782v7 [retrieved on 2018-12-20]**
• **Vincent Dumoulin ET AL: "Adversarially Learned Inference", arXiv:1606.00704v3 [stat.ML], 21 February 2017 (2017-02-21), XP055537377, Retrieved from the Internet:**
  **URL:https://arxiv.org/abs/1606.00704v3 [retrieved on 2018-12-20]**

EP 3 640 857 B1

**Description**

The present application relates to a method for generating a signal indicating anomalous scenarios using an evaluation machine comprising a discriminator network, a generator network, and an encoder network, calibrated using one or more intermediate layer activations of a discriminator network.

US patent application publication US 2016/0272113 A1 relates to a monitoring system aimed at determining that a vehicle is not being operated by a driver. Based on the vehicle not being operated, the monitoring system can analyse data from one or more sensors of the vehicle to monitor a passenger compartment of the vehicle. With data from the one or more sensors, the monitoring system can detect an anomaly within the passenger compartment of the vehicle. Based, at least in part, on detecting the anomaly, the monitoring system can transmit a signal corresponding to an alert to a computing device of the driver, the alert indicating the anomaly. Houssam Zenati et al, 2018: "Efficient GAN-Based Anomaly Detection", arXiv:1802.06222v1, describes the use of bi-directional generative adversarial networks for anomaly detection.

It is an objective of the present invention to improve the safety of vehicles operations. A further objective is to indicate a potential threat to the safety of vehicles operations. A further objective is to reduce the cost of vehicle manufacturing. A further objective is to reduce storage requirements for vehicle scenario information. A further objective is to improve the cautiousness of autonomous vehicle behaviour.

The objectives of the present invention are solved by the subject matter of claims 1, 11 and 12.

In particular, the object of the present invention is solved by a method for generating a signal indicating anomalous vehicle scenario in accordance with the independent claims. Further embodiments are defined by the dependent claims.

By updating the encoder network (E) and/or the generator network (G) using the activation function, the networks are better trained for the problem of detecting anomalous scenarios.

Throughout the application, affecting and output of a loss function (such as increasing/decreasing) by updating networks, does not necessarily mean that the output is calculated, only that it would be affected if calculated using the updated networks.

Reducing and/or increasing the outputs of the loss functions includes comparing the output of the activation function with two different input to the discriminator network (D). The first input includes sensor training signals (x). The second input to the discriminator network (D) includes a reconstruction of the sensor training signal (x). The reconstruction is defined by the function G(E(x)).

"D", "G", and "E" with parenthesis denotes the output of the discriminator network, the generator network and the encoder network respectively, where the symbol within the parenthesis denotes the input to the respective network.

In particular, the networks are trained to minimize the "reconstruction" as part of the training objective. After training, the reconstruction loss, such as a difference between the sensor signal to be detected and the reconstruction of the sensor signal to be detected, should be small for sensor signals for which the generator network and encoder network are trained. For sensor signals for detection that are from a distribution not trained for (i.e. anomalous scenarios), the reconstruction loss will probably be greater.

Reducing the output of the loss function includes reducing a vector norm of the difference between, the output of the activation function when the input to the discriminator network (D) are the sensor signals (x) and the encoder network, given by the function f(x, E(x)), and the output of the activation function when the input to the discriminator network (D) is the reconstruction and the encoder network, given by the function f(G(E(x),E(x)).

In this case f(x,z) denotes the output of the activation function when x, z are input to the discriminator network (D). The difference may be given by the function f(x, E(x)) - f(G(E(x),E(x)) and the norm is preferably an L2-norm vector given by the function

$$||f(x,\ E(x)) - f(G(E(x),E(x))||^2.$$

The method may improve the safety of vehicles operations and indicate potential threats by generating a signal indicating anomalous scenarios. The method may also reduce the cost of vehicle manufacturing by generating a signal indicating anomalous scenarios and focus development resources on anomalous scenarios rather than on normal scenarios. The method may also improve the cautiousness of autonomous vehicle operation by removing from autonomous vehicle training scenarios, scenarios including vehicle controlled in an irregular way.

By using random noise signals to train the evaluation machine, no prior manual classification of the input signal have to be made, allowing unsupervised calibration of the networks. This improves the efficiency of calibration, especially with large numbers of training signals, and allows automated calibration running in real-time, or almost real-time, with low latency. The noise signals may be generated by the noise generator.

Updating the encoder network may include minimizing an encoder loss function:

$$E_{x \sim p_x}\left[E_{z \sim p_E(.|x)}\left[0.5 * \left(\|f(x, E(x)) - f(G(E(x)), E(x))\|\right)^2 + 0.5 * \log D(x, z)\right]\right]$$

Updating the generator network may include minimizing a generator loss function:

$$E_{x \sim p_x}\left[E_{z \sim p_E(.|x)}\left[0.5 * (\|f(x, E(x)) - f(G(E(x)), E(x))\|)^2\right]\right] + E_{z \sim p_z}\left[E_{x \sim p_G(.|z)}\left[0.5 * \log(1 - D(x, z))\right]\right]$$

Updating the discriminator network may include minimizing a discriminator loss function:

$$-\left[E_{x \sim p_x}\left[E_{z \sim p_E(.|x)}\left[\log D(x, z)\right]\right] + E_{z \sim p_z}\left[E_{x \sim p_G(.|z)}\left[\log(1 - D(x, z))\right]\right]\right]$$

"E" with subscript and square brackets denotes an expectation value of the formula within the square brackets. The subscript denotes a sample and the (theoretical) probability distribution from where this sample is drawn.

The calibration step may be carried out iteratively a plurality of times and the discriminator, generator and encoder networks preferably updated during each iteration (such as towards the end of each iteration). The steps may further be repeated until the generator, encoder, and/or discriminator are sufficiently calibrated, e.g. anomalous scenarios are sufficiently detected. By repeating the calibration step a plurality of times, an indication of anomalous vehicle scenario may be signalled with improved sensitivity.

The output signal of the discriminator network indicates a confidence of the discriminator network to categorize (distinguish between) a first category of signals comprising sensor signals from vehicle sensors and output signals of the encoder network, and a second category of signals comprising noise signals and output signals of the generator network.

The discriminator network may indicate the confidence with a probability estimate, reaching from with a first value (such as one) when the discriminator network indicates an input signal of the discriminator as belonging to one of the first category and the second category, and to a second value (such as zero) when the discriminator network indicates another input signal to the discriminator as clearly belonging to a another of the first category and the second category. The output of the discriminator loss function may be minimized when the discriminator network correctly categorizes the first category and the second category of signals with high confidence.

The first category may be (x,z) pair where x comes from real data and z is generated from the encoder network with input x. The second category may be (x,z) pair where z may be a random vector (such as a Gaussian random vector) and x may be generated from the generator network with input z.

The output signal of the discriminator network may indicate a value approaching a third value (such as one half) that the discriminator network substantially cannot categorize an input signal as belonging either to the first category, or the second category. An output from the discriminator approaching the third value may indicate a low confidence of the discriminator network in categorizing the input signal in either the first category or in the second category.

The calibrations step may be carried out until a Nash equilibrium of the loss functions is essentially achieved at least locally. When the Nash equilibrium is essentially achieved, the generator network and the encoder network may be calibrated so that the discriminator network substantially cannot distinguish between the first category of signals and the second category of signals. The output signal of the discriminator network may approach the third value, such as one half.

Updating the discriminator network, the generator network, and the encoder network by affecting outputs of the loss functions in a first and/or second directions respectively improves the evaluation machine's sensitivity to anomalous vehicle scenarios.

Affecting the output of the loss functions (in a first and/or second direction) may include taking a stochastic gradient decent/ascent step. The stochastic gradient decent/ascent step may further be determined by backpropagation of the discriminator network, the encoder network, and/or the generator network.

Using stochastic gradient decent/ascent and backpropagation improves the efficiency of the networks update and calibration in particular when the number of dimensions of the vehicle sensors data increases.

The stochastic gradient decent/ascent may be based on a subset of a complete set of training scenarios.

During updating of the networks during the calibration step, the ratio between the first category of signals and the second category of signals may be between 1:4 and 4:1, more preferably between 1:2 and 2:1, more preferably between 4:5 and 5:4. The ratio may be close to 1:1. This ensures that the discriminator gives roughly the same weight to the two categories during training. The preferred ratios ensures optimal training conditions.

Generate the anomaly score may include generating a reconstruction loss value and/or generating a discriminator score value. The reconstruction loss value and the discriminator score value may be linearly weighted into the anomaly score.

The reconstruction loss may be given by the function:

$$L_G(x) \; = \; \|x - G(E(x))\|_1$$

where x is sensor signals captured during a scenario under evaluation.

For typical (normal) sensor signals x, the reconstruction loss may be small, since both G and E have been trained on typical sensor signals. For anomalous sensor signals x, the reconstruction loss may be large, since neither G nor E have been trained on anomalous sensor signals.

Using the reconstruction loss (i.e. the amount of deformation of the original data, when encoded with the encoder network and "decoded" with the generator network) to calculate anomaly score further improves the accuracy of indicating anomalous vehicle scenario.

The discriminator score may be given by the function:

$$S_D(x) = -D(x, E(x))$$

where x is sensor signals captured during a scenario under evaluation.

The output of the discriminator score function may be close to -1 when the input "x" includes signals from the vehicle sensors during normal scenarios.

The output of the discriminator score function may be different from -1 (such as close to 0), when the input "x" includes signals from the vehicle sensors captured during anomalous scenario conditions.

The discriminator score may also be given by the cross entropy function:

$$S_D(x) = -\log(D(x, E(x)))$$

The discriminator score may then be close to 0 when the input signal "x" includes signals from the vehicle sensors during normal scenarios. The discriminator score may be significantly greater than 0 (such exceeding 1, preferably exceeding 10, preferably exceeding 100) when the input "x" includes signals from the vehicle sensors captured during anomalous scenario conditions.

The discriminator score may be based on feature matching. In this case, the output from the a hidden layer (such as the second last layer) of the discriminator network (function f) corresponds to a collection of high-level features (the features are high-level since it is the last layer before the output).

The anomaly score may be calculated by comparing:

a) the output signal of the activation function when the input to the discriminator network are sensor signals (i.e. the sensor signals to be detected); with
b) the output signal of the activation function when the input to the discriminator network are the reconstruction of the same sensor signals.

The anomaly score may then be given by

$$S_A(x) = |f(x, E(x)) - f(G(E(x)), E(x))|_1$$

where f is the output from the hidden layer (such as the second last layer or the last hidden layer).

For normal data the features in the discriminator network from a sample x are similar to the features from the encoded and decoded version of x --> G(E(x)). If x is normal the network will reconstruct it and the features in the hidden layer should match well.

If the networks are not trained on the scenario, the reconstruction will be worse and the features different leading to an increased anomaly score.

Using the discriminator score (e.g. output of the discriminator network) to calculate anomaly score further improves the accuracy of indicating anomalous vehicle scenario.

In addition, by linearly weighting the reconstruction loss value and the discriminator score value into the anomaly score, both the discriminator network, generator network, and encoder network are used to assess the anomaly score. This achieves a more stable anomaly score.

The linearly weighted anomaly score may be given by the function:

$$S_A(x) = w \, L_G(x) + (1-w) \, S_D(x)$$

The anomaly score may be weighted using a geometric mean of the reconstruction loss and the discriminator score.

The discriminator network, the generator network, and/or the encoder network may be convolutional neural networks. The input to the convolutional neural network may then be a signal containing information of scenarios represented in two dimensions. The signal may contain information related to image data.

By configuring the discriminator network, the generator network, and/or the encoder network to be a convolutional neural network, spatial structure of input signals may be taken into account more efficiently, vastly reducing the number of network parameters, reducing storage and processing requirements.

The method further comprise: generating a driver alert of anomalous scenario and/or a request for driver take-over during closed-loop operation. The method may further comprise filtering from vehicle training scenario data, scenario data associated with the signal indicating anomalous scenario acquired during open-loop operation, where anomalous scenario indicate irregular driver behaviour, wherein scenario data not associated with the signal indicating anomalous scenario is stored in a storage for vehicle training, and/or reducing a storage volume of a long time storage of vehicle training data, by filtering from the data storage, scenario data associated with the signal indicating anomalous scenario.

Using the invention, a vehicle controller may be able to distinguish between driving scenarios that the vehicle is able to handle autonomous, from driving scenarios that the vehicle potentially will not be able to handle autonomous in a safe manner. Generating an alert to the driver may make the driver observant on that the vehicle is entering into an environment that the vehicle may not be able to handle autonomous.

In a closed-loop operation (i.e. autonomous vehicle operation substantially without human direct interaction), this may involve requesting the driver to take over control of the vehicle. Alternatively, the vehicle may enter into a "safe mode" vehicle operation wherein vehicle velocity is decreased or wherein the vehicle is parked in a controlled manner. In an open-loop operation (i.e. vehicle operation involving human direct interaction) this may make the driver aware of a danger scenario that could affect the safe operation of the vehicle and prepare the driver to take responsive actions.

The method may also be performed on data collected from one or more previous driving occasions. The detections steps may be applied on such data to indicate a potential irregular driving behaviour. This allows scenarios from "bad" driving behaviour to be removed from driving data used to train the vehicle for autonomous driving.

Further, the method may be applied to remove redundant data in vehicle operation scenario database. Similar scenario data will generate low anomaly score, indicating that limited amount of additional information is contained needed to improve autonomous driving. Redundant scenario data may be removed from storage, such as long term storage.

The method may further comprise updating a controller of a vehicle in response to the signal indicating anomalous scenario. The signal indicating anomalous vehicle scenario indicates that vehicle controller may have to be amended in order to the vehicle to autonomous handle the indicated scenario in a safe manner in the future. Responsive to the signal indicating anomalous vehicle scenario, the autonomous vehicle operation controller may be amended to include the operation of the anomalous scenario. Subsequently, the discriminator network, the generator network, and/or the encoder network may be updated according to the calibrations step so that the previously anomalous scenario is subsequently considered a normal scenario. In this manner the controller may progressively be improved to safely handle more and more scenarios until human monitoring is substantially obsolete.

The evaluation machine may be built into the vehicle for the detection steps to be performed in the vehicle. The vehicle may also be part of a system, wherein information regarding vehicle scenario is sent within the system and the signal indicating anomalous vehicle scenario may be performed outside the vehicle. A signal may be sent to the vehicle in order for the vehicle to take appropriate action on the anomalous scenario. An activator in the vehicle such as an indication light might make the passenger aware of anomalous scenario. Vehicle control may also be handed over to remote human operation in case of anomalous scenario.

All or part of the above and below-mentioned methods may be implemented through software programming, and the software program may be stored in readable storage media, such as dedicated or distributed computer hard disk, USB-memory, or optical disk.

The benefits and advantages of the aforementioned vehicle, storage medium and system are equal or similar to the advantages of the above-mentioned method.

In the following, embodiments of the invention are described with respect to the figures, wherein

Fig. 1    shows a schematic illustration of vehicle operation with data collection and feedback loop;

Fig. 2    illustrates the structure of networks calibration with bidirectional generative networks;

Fig. 3       illustrates a schematic diagram of a discriminator network with intermediate layer and activation function.

Fig. 4A       illustrates detection of anomalous sensor data, driver alert and takeover request;

Fig. 4B       illustrates detection of anomalous sensor data and irregular driver behaviour filtering; and

Fig. 4C       illustrates detection of anomalous sensor data and reducing data volume by data deletion.

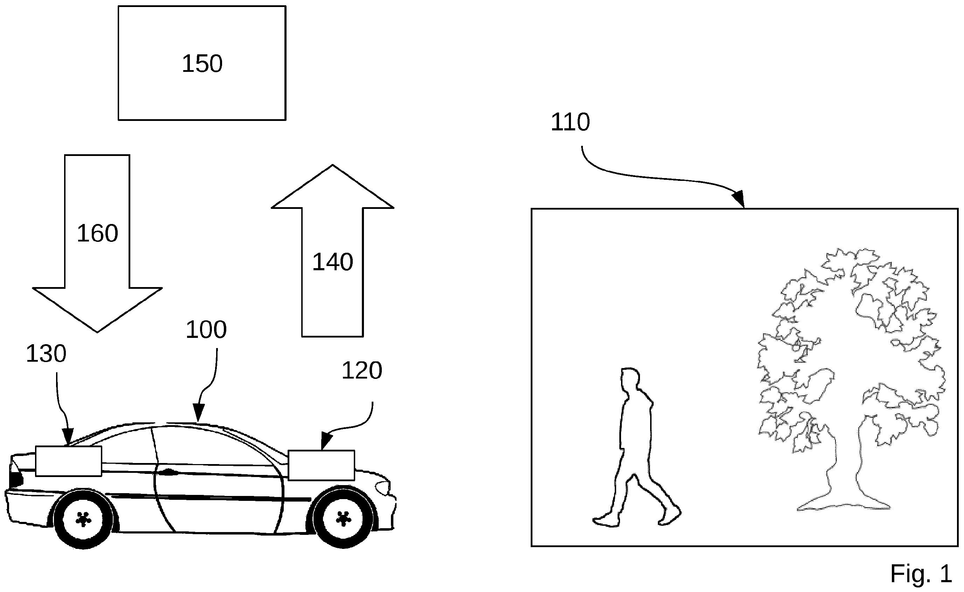

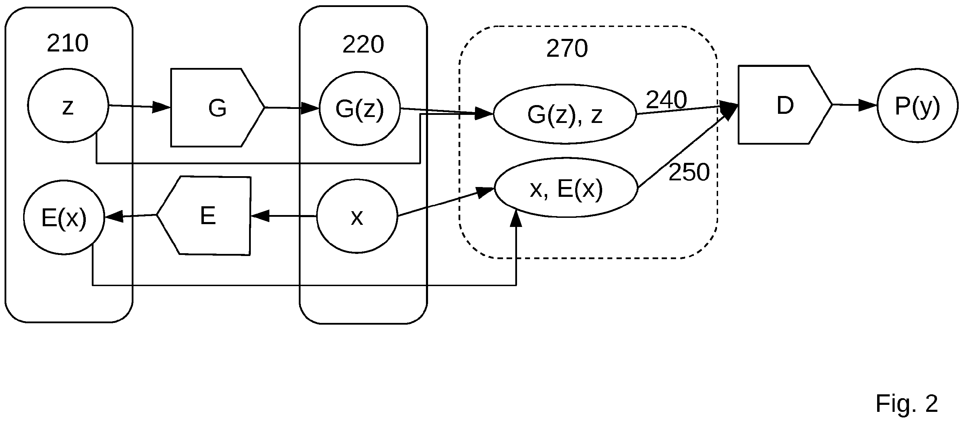

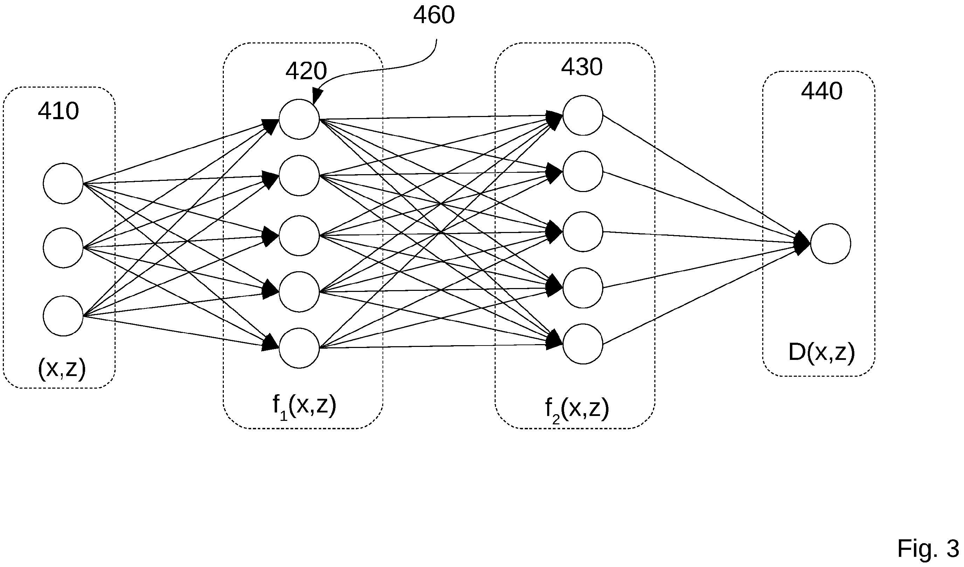

As described above, the invention include calibration step and detection steps. Calibration (or training) is depicted in Fig. 2. Detection (or inference) is primarily depicted in Figs. 1 and 3.

Fig. 1 depicts a vehicle 100 comprising sensors 120 generating signals 140 indicating current vehicle scenario 110. The signals 140 may be input to an evaluation machine 150 generating signal 160 indicating anomalous scenario. Controller 130 may process signal 160 indicating anomalous scenario. The controller may, in response to signal 160 alert the driver and/or passenger of anomalous scenario. The controller may also put the vehicle in a "safe mode" that may include reducing the speed of the vehicle 100, or parking the vehicle in a controlled manner. Although depicted as outside the vehicle 100, the evaluation machine 150 may be part of the vehicle. The sensors 120 may be part of the vehicle 100, or outside the vehicle 100. The signals 140 may also come from other sources, such as information from third party regarding traffic conditions or navigation assistance.

The evaluation machine 150 may determine to generate the signal 160 indicating anomalous scenario when an anomaly score is above a pre-set threshold. The anomaly score may be generated from an output signal of the encoder network E, an output signal of the generator network G, and/or an output signal of the discriminator network D.

Fig. 2 depicts a structure of the evaluation machine during calibration of the discriminator D, generator G, and encoder E. The training procedure for G and E includes calibrating their parameters to maximising the probability of D making a mistake. In a fully trained system, the output of G resembles the training data x, and the output of E resembles the corresponding feature set z, and the discriminator D is not able to distinguish between input data in a first category 250 (including sensor signals x and output signal E(x) of the encoder network with inputs of the sensor signals x), and a second category 240 (including generator output G(z) and noise signals z).

Whereas generator G transforms (maps) noise signals from the feature space 210 into signal space 220 corresponding to signals from the vehicle sensors 120, encoder network E transforms (maps) signals in signal space into signals in the feature space 210. In a fully trained system, encoder E generated the inverse of generator G for normal training scenarios. Discriminator network D may down-sample input signals into probability estimates. Generator network G may up-sample noise vectors into estimates of signal data. Encoder E may down-sample input signals into feature signals.

The training of the networks may be done by determining stochastic gradient (decent or ascent) of the output of the loss function (value function or objective) over the training batch 270. The parameters of the discriminator network may be calibrated to increase the output of the loss function and the parameters of the generator and encoder networks may be calibrated to decrease the output of the loss function.

Fig. 3 depicts a schematic diagram of a discriminator network (such as a neural network) of the present invention. The discriminator network may comprise input signals 410, one or more intermediate (hidden) layers, such as a first intermediate layer 420, and a second intermediate layer 430, and an output layer 440. Each intermediate layer may contain one or more nodes 460. Each node may include a weight and a bias. The weights and biases of a neural network may be the parameters of the network. The output layer 440 may also be output of the discriminator network (denoted by D(x,z)). The last activation function may typically output a scalar value.

Input signals to the exemplary discriminator network may include signals from the latent space denoted by z. For calibration, (training) z may be noise signals generated from a random signal generator. Input signals may also include signals originating from one or more vehicle sensors denoted by x (data space).

Each intermediate layer may include an activation function ($f_1$, $f_2$, etc.). Each activation function may be a vector function and the output of each activation function may be features of the intermediate layer.

The set of weights and biases of the nodes of each layer may be updated during networks calibration. The output of each activation function of each network layer may depend on the activation function of the previous layer and on the weights and biases of the layer nodes.

An output of an activation function of an intermediate layer (of the discriminator network) may be used to reduce an output of one or more loss functions according to the invention.

Although depicted as two intermediate layer, the discriminator network may have any number of intermediate layers. Although depicted as comprising three input signals, four nodes in each intermediate layer, and one output signal, any number/size of input signals, network nodes and output signals may be used.

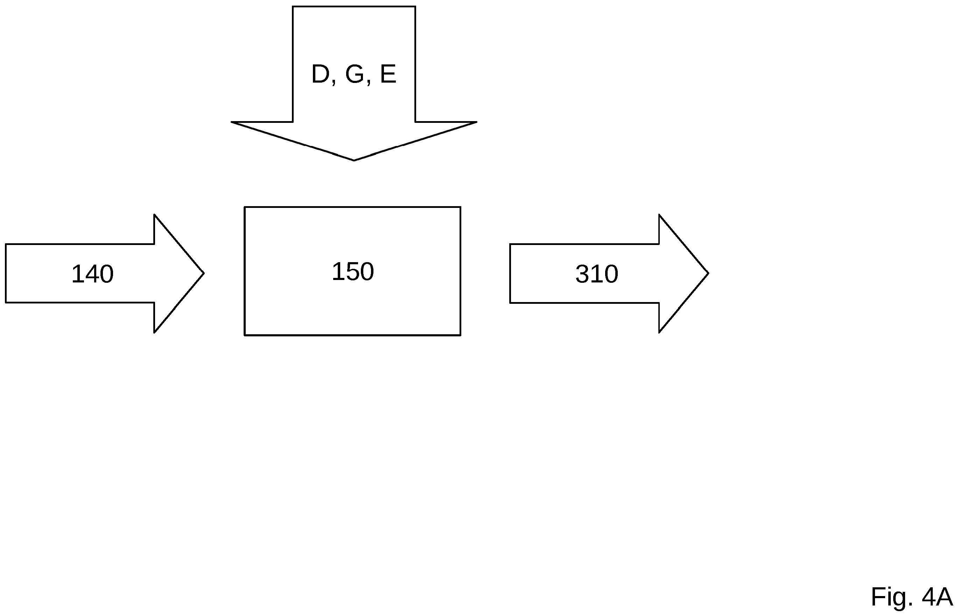

Anomaly detection of sensor signals have multiple application in automotive industry. Figs. 4A to 4C shows examples of application of the invention.

Fig. 4A depicts the evaluation machine 150 used to generate a signal indicating anomalous scenario 310 during vehicle operation. The anomaly score generated by the evaluation machine 150 may indicate how well the current scenario has been covered in previous drives, which have been used for the training of models for autonomous control of the vehicle. If the similar scenario coverage is very low, or not covered at all, the scenario should be classified as anomalous. The more scenarios of similar kinds have been used for training vehicle control models, the better the models may handle them. Hence, the classification into normal and anomalous scenarios may indicate how well driving models (and the vehicle) handle the given situation. During closed-loop operation, i.e. driving without human intervention, if the estimated ability is too low (i.e. the anomaly score is above a pre-set threshold) the signal might indicate that the vehicle may not be confident in its ability to handle the given situation in a safe manner.

The vehicle may request the driver to take over control of the vehicle. The signal may indicate to the driver that additional precaution is needed, such as that driver's hands are put on the steering wheel and the driver has readiness to brake. The signal may indicate with reducing speed, vibrating steering wheel and/or drifting steering towards the side of the road that additional attention is needed. The vehicle may have sensors for assessing that driver is alert, such as sensor indicating that driver's hands are on the steering wheel, and may enter a safe mode, such as including stopping the vehicle in a controlled manner, such as on the roadside, unless signals indicate that driver is satisfactory controlling the vehicle.

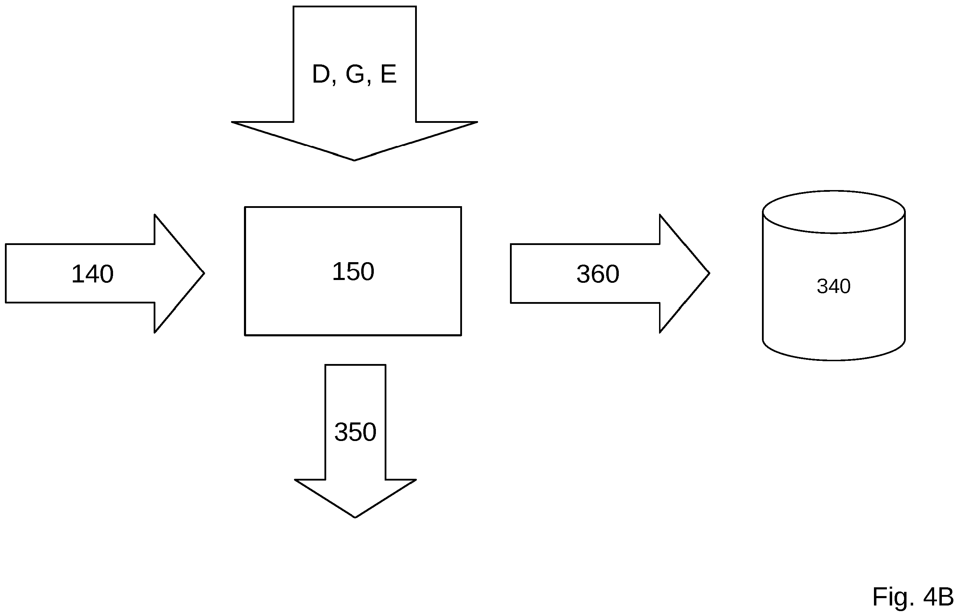

Fig. 4B depicts the evaluation machine 150 used to filtering vehicle controller training data. Professional drivers operating a vehicle to collect training data for autonomous vehicles to follow (expert data), it may happen that some of the training data is not satisfyingly cautious. The driver may not have been observant during the particular driving session or performed a rough manoeuvre that should not be imitated by the vehicle. The vehicle training scenario data (140) may be input to the evaluation machine 150. Scenario data associated with the signal indicating anomalous scenario 350 acquired may be filtered training data, where anomalous scenario may indicate irregular driver behaviour. Scenario data not associated with the signal indicating anomalous scenario 360 may be stored in a storage 340 for vehicle training.

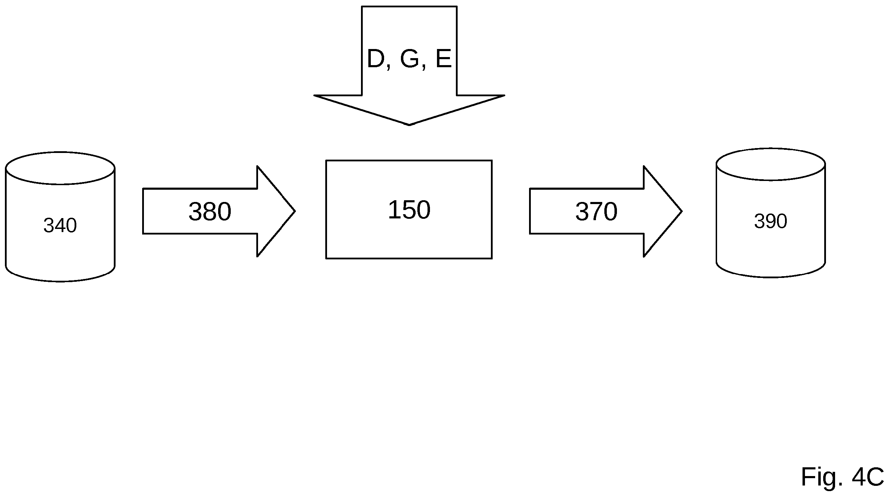

Fig. 4C depicts the evaluation machine 150 used to reducing a storage volume of a long time storage 390 of vehicle training data. Non-redundant data, i.e. data that gives additional information of value compared to already stored training data, may be indicated by the evaluation machine as anomalous. In this case, only training data indicating anomalous scenarios 370 are by stored 390 for future training sessions.

In this case, the pre-defined threshold for the classification of a scenario as an anomaly may be adjusted such that a fraction, such as the top 5% of all collected data (highest anomaly scores) is stored.

Reference numerals:

| | |
|---|---|
| 100 | Vehicle |
| 110 | Environment |
| 120 | Sensors |
| 130 | Controller |
| 140 | Sensors signals |
| 150 | Evaluation machine |
| 160 | Signal indicating anomalous scenario |
| 210 | Feature space |
| 220 | Data space |
| 240 | Feature set and generator (decoder) generated data (latest generator) |
| 250 | "Real" data and encoder generated feature set |
| 270 | Batch of training data for networks calibration |
| 410 | Input sensor signals |
| 420 | First Intermediate (hidden) layer |
| 430 | Second Intermediate (hidden) layer |
| 440 | Output signal |
| 460 | Network node |
| 310 | Driver alert and/or request for driver takeover |
| 340 | Storage |
| 350 | "Irregular" driver behaviour, filtered from training scenarios |
| 360 | Appropriate driver behaviour, used for algorithm training scenarios |
| 370 | Sensor data related to anomalous situation (storing for future training) |
| 380 | Data representing training scenarios |
| 390 | Long term storage |

D          Discriminator
G          Generator
E          Encoder
z          Noise signal from random noise generator
G(z)       Output signal of generator network with noise signals input signal
x          Data sample from vehicle sensors (x may be training/network calibration signals or detection/inference signals depending on context)
E(x)       Output signal of encoder network with data samples input signal
P(y)       Probability of input data being in certain category

**Claims**

1.   A method for generating a signal (160) indicating anomalous vehicle scenario using an evaluation machine comprising a discriminator network (D), a generator network (G), and an encoder network (E), the method being executed by at least one processor and comprising calibration step:

a) updating the discriminator network (D), the encoder network (E), and the generator network (G) using two categories of signals:

- a first category of signals (250) comprising training signals (x) from vehicle sensors (120) and corresponding output signals of the encoder network (E(x));
- a second category of signals (240) comprising noise signals (z) and corresponding output signals of the generator network (G(z));
wherein updating the discriminator network (D) includes training the discriminator network (D) to distinguish between the first category (x, E(x)) and the second category (G(z), z),
wherein updating the encoder network (E) and the generator network (G) includes minimizing an output of at least one loss function comprising a term representing a norm of the difference between:

- the output of an intermediate layer of the discriminator network (D) when the inputs to the discriminator network (D) are the sensor signals (x) and the corresponding output signals of the encoder network (E(x)), given by the function f(x, E(x)), and
- the output of the intermediate layer of the discriminator network (D) when the inputs to the discriminator network (D) are a reconstruction of the sensor signals (G(E(x))) and the output signals of the encoder network in response to the sensor signals (E(x)), given by the function f(G(E(x),E(x);

wherein the function f(x,z) denotes the output of the intermediate layer of the discriminator network (D) when x, z are input to the discriminator network (D); and
the method further comprising detection steps:

b) generating an anomaly score from an output signal of the encoder network (E), an output signal of the generator network (G), and/or an output signal of the discriminator network (D), wherein an input signal to the encoder network (E) includes data from vehicle sensors (120);
c) comparing the anomaly score with a pre-set threshold; and
d) generating a signal (160) indicating anomalous scenario depending on the comparison, preferably if the anomaly score is above the pre-set threshold;
e) in response to the generated signal (160) indicating anomalous scenario, generating a driver alert of anomalous scenario and/or a request for driver take-over (310) during closed-loop operation.

2.   The method of claim 1,
wherein the norm is given by the function

$$||f(x,\ E(x)) - f(G(E(x),E(x)||.$$

3.   The method of claim 2,

wherein updating the encoder network may include minimizing an encoder loss function

$$E_{x \sim p_x}\left[E_{z \sim p_E(.|x)}\left[0.5 * \left(\|f(x, E(x)) - f(G(E(x)), E(x))\|\right)^2 + 0.5 * \log D(x, z)\right]\right]$$

updating the generator network may include minimizing a generator loss function:

$$E_{x \sim p_x}[E_{z \sim p_E(.|x)}[0.5*(\|f(x, E(x)) - f(G(E(x)), E(x))\|)^2]] + E_{z \sim p_z}[E_{x \sim p_G(.|z)}[0.5*\log(1 - D(x, z))]]$$

and/or updating the discriminator network may include minimizing a discriminator loss function:

$$-[E_{x \sim p_x}[E_{z \sim p_E(.|x)}[\log D(x, z)]] + E_{z \sim p_z}[E_{x \sim p_G(.|z)}[\log(1 - D(x, z))]]]$$

4. The method of any of the claims 1 or 3,
wherein the anomaly score is based on comparing the activation function when the input to the discriminator network (D) are sensor signals to be detected in combination with reconstruction of the sensor signals; given by the equation

$$S_A(x) = |f(x, E(x)) - f(G(E(x)), E(x))|_1.$$

5. The method of any of the claims 1 to 4,

   wherein the method comprises iterating through step a) a plurality of times,
   wherein the discriminator network, generator network and the encoder network are preferably updated during each iteration.

6. The method of any of the claims 1 to 5,
wherein the output signal of the discriminator network (D) indicates a confidence of the discriminator network (D) to categorize the two categories.

7. The method of any of the preceding claims,

   wherein affecting the output of the loss function includes determining at least one stochastic gradient,
   wherein the stochastic gradient is preferably determined by a backpropagation of the discriminator network, the encoder network, and/or the generator network.

8. The method of any of the preceding claims,

   wherein generating the anomaly score includes generating a reconstruction loss value and/or generating a discriminator score value; and
   wherein the discriminator score is preferably based on feature matching; and/or
   wherein the reconstruction loss value and the discriminator score value are preferably linearly weighted into the anomaly score.

9. The method of any of the preceding claims,
wherein the discriminator network, the generator network, and/or the encoder network is a convolutional neural network, and wherein the input to the convolutional neural network is preferably a signal containing information of scenarios in two dimensions, more preferably a signal containing image data.

10. The method of any of the preceding claims,
wherein the method further comprises:

   - updating a controller (130) of a vehicle (100) in response to the signal (160) indicating anomalous scenario.

11. Vehicle (100) or system with a vehicle (100), comprising an evaluation machine with a discriminator network (D), a generator network (G), and an encoder network (E) adapted according to the calibration step of claim 1 and comprising means for carrying out the detection steps of claim 1.

12. Computer readable storage medium containing instructions which, when executed by at least one processor, cause the processor to carry out the steps of the method of one of the claims 1 to 10.

**Patentansprüche**

1. Verfahren zum Erzeugen eines Signals (160), das unter Verwendung einer Beurteilungsmaschine, die ein Diskriminatornetzwerk (D), ein Generatornetzwerk (G) und ein Codierernetzwerk (E) umfasst, ein anormales Fahrzeugszenario anzeigt, wobei das Verfahren von mindestens einem Prozessor ausgeführt wird und einen Kalibrierungsschritt umfasst:

a) Aktualisieren des Diskriminatornetzwerks (D), des Codierernetzwerks (E) und des Generatornetzwerks (G) unter Verwendung von zwei Kategorien von Signalen:

- eine erste Kategorie von Signalen (250), die Trainingssignale (x) von Fahrzeugsensoren (120) und entsprechende Ausgangssignale des Codierernetzwerks (E(x)) umfassen;
- eine zweite Kategorie von Signalen (240), die Rauschsignale (z) und entsprechende Ausgangssignale des Generatornetzwerks (G(z)) umfassen:

wobei das Aktualisieren des Diskriminatornetzwerks (D) das Trainieren des Diskriminatornetzwerks (D) zum Unterscheiden zwischen der ersten Kategorie (x, E(x)) und der zweiten Kategorie (G(z), z) beinhaltet,
wobei das Aktualisieren des Codierernetzwerks (E) und des Generatornetzwerks (G) das Minimieren einer Ausgabe von mindestens einer Verlustfunktion beinhaltet, die einen Term umfasst, der einen Norm des Unterschieds zwischen Folgendem repräsentiert:

- der Ausgabe einer Zwischenschicht des Diskriminatornetzwerks (D), wenn die Eingaben des Diskriminatornetzwerks (D) die Sensorsignale (x) und die entsprechenden Ausgangssignale des Codierernetzwerks (E(x)) sind, die durch die Funktion f(x, E(x)) gegeben sind, und
- der Ausgabe der Zwischenschicht des Diskriminatornetzwerks (D), wenn die Eingaben des Diskriminatornetzwerks (D) eine Rekonstruktion der Sensorsignale (G(E(x))) und die Ausgangssignale des Codierernetzwerks in Reaktion auf die Sensorsignale (E(x)) sind, die durch die folgende Funktion gegeben sind;

f(G(E(x), E(x));
wobei die Funktion f(x,z) die Ausgabe der Zwischenschicht des Diskriminatornetzwerks (D) kennzeichnet, wenn x, z in das Diskriminatornetzwerk (D) eingegeben werden; und wobei das Verfahren ferner Detektionsschritte umfasst:

b) Erzeugen einer Anomaliebewertung aus einem Ausgangssignal des Codierernetzwerks (E), einem Ausgangssignal des Generatornetzwerks (G) und/oder einem Ausgangssignal des Diskriminatornetzwerks (D), wobei ein Eingangssignal des Codierernetzwerks (E) Daten von Fahrzeugsensoren (120) beinhalten;
c) Vergleichen der Anomaliebewertung mit einem voreingestellten Schwellwert und
d) Erzeugen eines Signals (160), das ein anormales Szenario in Abhängigkeit vom Vergleich anzeigt, bevorzugt wenn die Anomaliebewertung über dem voreingestellten Schwellwert liegt;
e) in Reaktion auf das erzeugte Signal (160), das ein anormales Szenario anzeigt, Erzeugen eines Fahrerhinweises zum anormalen Szenario und/oder einer Anforderung einer Fahrerübernahme (310) während eines Betriebs in einer geschlossenen Schleife.

2. Verfahren nach Anspruch 1,
wobei die Norm durch die folgende Funktion gegeben ist

$$||f(x, E(x)) - f(G(E(x),E(x)||.$$

3. Verfahren nach Anspruch 2,

wobei das Aktualisieren des Codierernetzwerks das Minimieren einer Codiererverlustfunktion beinhalten kann:

$$E_{x \sim p_x}[E_{z \sim p_E(.|x)}[0.5 * (||f(x, E(x)) - f(G(E(x)), E(x))||)^2 + 0.5 * \log D(x, z)]]$$

das Aktualisieren des Generatornetzwerks kann das Minimieren einer Generatorverlustfunktion beinhalten:

$$E_{x \sim p_x}[E_{z \sim p_E(.|x)}[0.5*(||f(x, E(x)) - f(G(E(x)), E(x))||)^2]] + E_{z \sim p_z}[E_{x \sim p_G(.|z)}[0.5*\log(1 - D(x, z))]]$$

und/oder das Aktualisieren des Diskriminatornetzwerks kann das Minimieren einer Diskriminatorverlustfunktion beinhalten:

$$-[E_{x \sim p_x}[E_{z \sim p_E(.|x)}[\log D(x, z)]] + E_{z \sim p_z}[E_{x \sim p_G(.|z)}[\log(1 - D(x, z))]]]$$

4. Verfahren nach einem der Ansprüche 1 oder 3,
wobei die Anomaliebewertung auf dem Vergleichen der Aktivierungsfunktion basiert, wenn die Eingabe in das Diskriminatornetzwerk (D) zu detektierende Sensorsignale in Kombination mit einer Rekonstruktion der Sensorsignale sind; gegeben durch die folgende Gleichung

$$S_A(x) = |f(x, E(x)) - f(G(E(x)), E(x))|_1.$$

5. Verfahren nach einem der Ansprüche 1 bis 4,
wobei das Verfahren das Wiederholen des Schritts a) eine Vielzahl von Malen umfasst, wobei das Diskriminatornetzwerk, das Generatornetzwerk und das Codierernetzwerk bevorzugt bei jeder Wiederholung aktualisiert werden.

6. Verfahren nach einem der Ansprüche 1 bis 5,
wobei das Ausgangssignal des Diskriminatornetzwerks (D) ein Vertrauen des Diskriminatornetzwerks (D) zum Kategorisieren der zwei Kategorien anzeigt.

7. Verfahren nach einem der vorhergehenden Ansprüche,

wobei das Beeinträchtigen der Ausgabe der Verlustfunktion das Bestimmen von mindestens einem stochastischen Gradienten beinhaltet,
wobei der stochastische Gradient vorzugsweise durch eine Rückpropagierung des Diskriminatornetzwerks, des Codierernetzwerks und/oder des Generatornetzwerks bestimmt wird.

8. Verfahren nach einem der vorhergehenden Ansprüche,

wobei das Erzeugen der Anomaliebewertung das Erzeugen eines Rekonstruktionsverlustwertes und/oder das Erzeugen eines Diskriminatorbewertungswertes beinhaltet und
wobei die Diskriminatorbewertung vorzugsweise auf einem Merkmalsabgleich basiert und/oder
wobei der Rekonstruktionsverlustwert und der Diskriminatorbewertungswert bevorzugt linear in die Anomaliebewertung gewichtet werden.

9. Verfahren nach einem der vorhergehenden Ansprüche,
wobei das Diskriminatornetzwerk, das Generatornetzwerk und/oder das Codierernetzwerk ein neuronales Faltungsnetzwerk ist und wobei die Eingabe in das neuronale Faltungsnetzwerk bevorzugt ein Signal ist, das bevorzugt Informationen von Szenarien in zwei Dimensionen ist, bevorzugter ein Signal, das Bilddaten enthält.

10. Verfahren nach einem der vorhergehenden Ansprüche,
wobei das Verfahren ferner Folgendes umfasst:

- Aktualisieren einer Steuerung (130) eines Fahrzeugs (100) in Reaktion auf das Signal (160), das ein anormales Szenario anzeigt.

11. Fahrzeug (100) oder System mit einem Fahrzeug (100), das eine Beurteilungsmaschine mit einem Diskriminatornetzwerk (D), einem Generatornetzwerk (G) und einem Codierernetzwerk (E) umfasst, die gemäß dem Kalibrierungsschritt nach Anspruch 1 angepasst sind und Mittel zum Umsetzen der Detektionsschritte nach Anspruch 1 umfassen.

12. Computerlesbares Speichermedium, das Anweisungen enthält, die, wenn sie von mindestens einem Prozessor ausgeführt werden, den Prozessor veranlassen, die Schritte des Verfahrens nach einem der Ansprüche 1 bis 10 umzusetzen.

**Revendications**

1. Procédé de génération d'un signal (160) indiquant un scénario de véhicule anormal à l'aide d'une machine d'évaluation comprenant un réseau discriminant (D), un réseau de génération (G), et un réseau de codage (E), le procédé étant exécuté par au moins un processeur et comprenant une étape d'étalonnage :

   a) la mise à jour du réseau discriminant (D), du réseau de codage (E), et du réseau de génération (G) à l'aide de deux catégories de signaux :

   - une première catégorie de signaux (250) comprenant des signaux d'entraînement (x) provenant de capteurs de véhicule (120) et des signaux de sortie correspondants du réseau de codage (E(x)) ;
   - une seconde catégorie de signaux (240) comprenant des signaux de bruit (z) et des signaux de sortie correspondants du réseau de génération (G(z)) ;

      dans lequel la mise à jour du réseau discriminant (D) inclut l'entraînement du réseau discriminant (D) pour distinguer la première catégorie (x, E(x)) de la seconde catégorie (G(z), z),
      dans lequel la mise à jour du réseau de codage (E) et du réseau de génération (G) inclut la minimisation d'une sortie d'au moins une fonction de perte comprenant un terme représentant une norme de la différence entre :

      - la sortie d'une couche intermédiaire du réseau discriminant (D) lorsque les entrées dans le réseau discriminant (D) sont les signaux de capteur (x) et les signaux de sortie correspondants du réseau de codage (E(x)), donnée par la fonction f(x, E(x)), et
      - la sortie de la couche intermédiaire du réseau discriminant (D) lorsque les entrées dans le réseau discriminant (D) sont une reconstruction des signaux de capteur (G(E(x))) et des signaux de sortie du réseau de codage en réponse aux signaux de capteur (E(x)), donnée par la fonction

      f(G(E(x),E(x) ;
      dans lequel la fonction f(x, z) indique la sortie de la couche intermédiaire du réseau discriminant (D) lorsque x, z sont des entrées dans le réseau discriminant (D) ; et
      le procédé comprenant en outre des étapes de détection :

   b) la génération d'un score d'anomalie à partir d'un signal de sortie du réseau de codage (E), d'un signal de sortie du réseau de génération (G), et/ou d'un signal de sortie du réseau discriminant (D), dans lequel le signal d'entrée dans le réseau de codage (E) inclut des données provenant de capteurs de véhicule (120) ;
   c) la comparaison du score d'anomalie à un seuil prédéfini ; et
   d) la génération d'un signal (160) indiquant un scénario anormal en fonction de la comparaison, de préférence si le score d'anomalie est supérieur au seuil prédéfini ;
   e) en réponse au signal généré (160) indiquant un scénario anormal, la génération d'une alerte conducteur de scénario anormal et/ou d'une demande de reprise conducteur (310) pendant une opération en boucle fermée.

2. Procédé selon la revendication 1,
   dans lequel la norme est donnée par la fonction

$$||f(x, E(x)) - f(G(E(x),E(x))||.$$

**3.** Procédé selon la revendication 2,

dans lequel la mise à jour du réseau de codage peut inclure la minimisation d'une fonction de perte de codage

$$E_{x \sim p_x}[E_{z \sim p_E(.|x)}[0.5 * ((\|f(x, E(x)) - f(G(E(x)), E(x))\|)^2 + 0.5 * \log D(x, z)]]$$

la mise à jour du réseau de génération peut inclure la minimisation d'une fonction de perte de génération :

$$E_{x \sim p_x}[E_{z \sim p_E(.|x)}[0.5*(\|f(x,E(x))-f(G(E(x)),E(x))\|)^2]]-E_{z \sim p_z}[E_{x \sim p_G(.|z)}[0.5*\log(1-D(x,z))]]$$

et/ou la mise à jour du réseau discriminant peut inclure la minimisation d'une fonction de perte de discrimination :

$$-[E_{x \sim p_x}[E_{z \sim p_E(.|x)}[\log D(x, z)]] + E_{z \sim p_z}[E_{x \sim p_G(.|z)}[\log(1 - D(x, z))]]]$$

**4.** Procédé selon l'une quelconque des revendications 1 à 3,
dans lequel le score d'anomalie est basé sur la comparaison de la fonction d'activation lorsque l'entrée dans le réseau discriminant (D) est des signaux de capteur à détecter en combinaison avec la reconstruction des signaux de capteur ; donné par l'équation

$$S_A(x) = |f(x, E(x))-f(G(E(x)), E(x))|_1.$$

**5.** Procédé selon l'une quelconque des revendications 1 à 4,
dans lequel le procédé comprend l'itération de l'étape a) une pluralité de fois, dans lequel le réseau discriminant, le réseau de génération et le réseau de codage sont de préférence mis à jour pendant chaque itération.

**6.** Procédé selon l'une quelconque des revendications 1 à 5,
dans lequel le signal de sortie du réseau discriminant (D) indique un niveau de confiance du réseau discriminant (D) pour catégoriser les deux catégories.

**7.** Procédé selon l'une quelconque des revendications précédentes,

dans lequel l'application de la sortie de la fonction de perte inclut la détermination d'au moins un gradient stochastique,
dans lequel le gradient stochastique est de préférence déterminé par une rétropropagation du réseau discriminant, du réseau de codage, et/ou du réseau de génération.

**8.** Procédé selon l'une quelconque des revendications précédentes,

dans lequel la génération du score d'anomalie inclut la génération d'une valeur de perte de reconstruction et/ou la génération d'une valeur de score de discrimination ; et
dans lequel le score de discrimination est de préférence basé sur une mise en correspondance de caractéristiques ; et/ou
dans lequel la valeur de perte de reconstruction et la valeur de score de discrimination sont de préférence pondérées de manière linéaire dans le score d'anomalie.

**9.** Procédé selon l'une quelconque des revendications précédentes,
dans lequel le réseau discriminant, le réseau de génération, et/ou le réseau de codage sont un réseau neuronal convolutif, et dans lequel l'entrée dans le réseau neuronal convolutif est de préférence un signal contenant des informations de scénarios dans deux dimensions, plus préférablement un signal contenant des données d'image.

**10.** Procédé selon l'une quelconque des revendications précédentes,

dans lequel le procédé comprend en outre :

- la mise à jour d'un dispositif de commande (130) d'un véhicule (100) en réponse au signal (160) indiquant un scénario anormal.

11. Véhicule (100) ou système avec un véhicule (100), comprenant une machine d'évaluation avec un réseau discriminant (D), un réseau de génération (G), et un réseau de codage (E) adapté selon l'étape d'étalonnage selon la revendication 1 et comprenant des moyens pour réaliser les étapes de détection selon la revendication 1.

12. Support de stockage lisible par ordinateur contenant des instructions qui, lorsqu'elles sont exécutées par au moins un processeur, amènent le processeur à réaliser les étapes du procédé selon l'une des revendications 1 à 10.

Fig. 1

Fig. 2

Fig. 3

EP 3 640 857 B1

D, G, E

150

310

140

Fig. 4A

Fig. 4B

Fig. 4C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160272113 A1